# EUROPÄISCHE PATENTSCHRIFT

(11) **EP 3 158 571 B1**
(45) Veröffentlichungstag und Bekanntmachung des Hinweises auf die Patenterteilung: **03.08.2022**
(21) Anmeldenummer: 15714411.4
(22) Anmeldetag: 16.03.2015
(51) Int. Cl.: H01H 36/00, H01H 9/54

(54) **TRENNSCHALTER ZUR GLEICHSTROMUNTERBRECHUNG**
SWITCH DISCONNECTOR FOR DIRECT CURRENT INTERRUPTION
DISPOSITIF DE COUPURE POUR INTERROMPRE UN COURANT CONTINU

(30) Priorität: 18.06.2014 DE 102014008706
(43) Veröffentlichungstag der Anmeldung: 26.04.2017
(60) Teilanmeldung: 20207521.4
(73) Patentinhaber: Ellenberger & Poensgen GmbH, D-90518 Altdorf (DE)
(72) Erfinder: GERDINAND, Frank, 38350 Helmstedt (DE); MECKLER, Peter, 91224 Hohenstadt/Pommelsbrunn (DE); MIKLIS, Markus, 90592 Pfeifferhütte (DE); NAUMANN, Michael, 90537 Feucht (DE); STROBL, Christian, 90419 Nürnberg (DE)
(74) Vertreter: FDST Patentanwälte
(86) Internationale Anmeldenummer: PCT/EP2015/000576
(87) Internationale Veröffentlichungsnummer: WO 2015/192924

(56) Entgegenhaltungen:
- EP-A1- 0 231 469
- EP-A1- 2 320 535
- DE-A1- 19 619 437
- DE-A1-102005 006 953
- DE-B3-102011 056 577
- DE-U1-202009 004 198

## Beschreibung

Die Erfindung betrifft eine Trennvorrichtung zur Gleichstromunterbrechung zwischen einer Gleichstromquelle und einer elektrischen Einreichung oder einer Last gemäß dem Oberbegriff des Anspruchs 1. Eine derartige Trennvorrichtung ist aus der WO 2010/108565 A1 und aus deren prioritätsbegründenden DE 20 2009 004 198 U1 bekannt. Unter Gleichstrom (DC) wird hierbei ein Nennstrombereich zwischen 4A_{DC} und 250A_{DC} bei einem Gleichspannungsbereich zwischen 300V_{DC} und 1500V_{DC} verstanden.

Da eine derartige Gleichspannungsquelle, beispielsweise einer Photovoltaikanlage, systembedingt einerseits dauerhaft einen Betriebsstrom und eine Betriebsspannung im Bereich zwischen 180V (DC) und 1500V (DC) liefert und andererseits - beispielsweise zu Installations-, Montage- oder Servicezwecken sowie zum allgemeinen Personenschutz eine zuverlässige Trennung der elektrischen Komponenten, Einrichtungen und/oder einer Last von der Gleichstromquelle gewünscht ist, muss eine entsprechende Trennvorrichtung in der Lage sein, eine Unterbrechung unter Last, d.h. ohne vorheriges Abschalten der Gleichstromquelle vorzunehmen.

Zur Lasttrennung kann ein mechanischer Schalter (Schaltkontakt) mit dem Vorteil eingesetzt werden, dass bei erfolgter Kontaktöffnung eine galvanische Trennung der elektrischen Einrichtung (Wechselrichter) von der Gleichstromquelle (Photovoltaikanlage) hergestellt ist. Nachteilig ist jedoch, dass derartige mechanische Schaltkontakte aufgrund des bei der Kontaktöffnung entstehenden Lichtbogens sehr schnell abgenutzt werden oder aber ein zusätzlicher Aufwand erforderlich ist, um den Lichtbogen einzuschließen und abzukühlen, was üblicherweise durch einen entsprechenden mechanischen Schalter mit einer Löschkammern erfolgt.

Werden demgegenüber zur Lasttrennung leistungsfähige Halbleiterschalter eingesetzt, so treten auch im Normalbetrieb unvermeidbare Leistungsverluste an den Halbleitern auf. Zudem sind mit derartigen Leistungshalbleitern keine galvanische Trennung und damit kein zuverlässiger Personenschutz sichergestellt.

Bei der aus der WO 2010/108565 A1 (DE 20 2009 004 198 U1) bekannten Trennvorrichtung ist deren mechanischer Schalter im nicht ausgelösten Zustand der Trennvorrichtung stromführend. Dem mechanischen Schalter ist eine Halbleiterelektronik parallel geschaltet, die mit dem mechanischen Schalter derart verschaltet ist, dass bei sich öffnendem mechanischen Schalter zur Unterbrechung des Stromflusses durch die Trennvorrichtung aufgrund eines sich im Bereich des mechanischen Schalters ausbildenden Lichtbogens die Halbleiterelektronik stromleitend geschalten wird.

Hierfür weist die Halbleiterelektronik einen Energiespeicher auf, der infolge des Lichtbogens innerhalb der Dauer des Lichtbogens aufgeladen wird und mittels dessen die Halbleiterelektronik betrieben wird. Aufgrund der Stromleitfähigkeit der Halbleiterschaltung im Falle eines Lichtbogens ist diesem ein vergleichsweise niederohmiger Strompfad parallel geschalten, was zu einem vergleichsweise frühen Erlöschen des Lichtbogens und somit zu einer vergleichsweise geringen Belastung der Trennvorrichtung oder Unterbrechungseinheit führt.

Aus der DE 196 19 437 A1 ist ein Schaltgerät mit einem in einem Hauptstrompfad angeordneten Niederspannungsschalter bekannt, welcher in Reihe liegend mindestens ein den abzuschaltenden Strom abtastendes Auslöseelement und eine Hauptschaltstelle sowie einen parallel zur Hauptschaltstelle geschalteten Nebenstrompfad enthält. In diesem sind zueinander parallel geschaltet ein steuerbarer Halbleiterschalter und ein Entlastungselement angeordnet. Parallel zur Hauptschaltstelle liegt eine Steuervorrichtung des Halbleiterschalters. Der Nebenstrompfad enthält in Reihe geschaltet mit der Parallelschaltung aus steuerbarem Halbleiterschalter und Entlastungselement eine Hilfsschaltstelle, welche beim Ausschalten zeitverzögert nach dem Öffnen des Halbleiterschalters öffnet.

Der Erfindung liegt die Aufgabe zu Grunde, eine besonders geeignete Trennvorrichtung zur Gleichstromunterbrechung zwischen einer Gleichstromquelle und einer elektrischen Einrichtung oder Last anzugeben.

Diese Aufgabe wird erfindungsgemäß gelöst durch die Merkmale des Anspruchs 1. Hierzu umfasst die nachfolgend auch als Hybridschutzschalter (hybrid circuit breaker) bezeichnete Trennvorrichtung eine mindestens einen ersten stromführenden Schutzschalter mit magnetischem Auslöser aufweisende Schutzschalteranordnung und eine dem ersten Schutzschalter der Schutzschalteranordnung parallel geschaltet Halbleiterelektronik, die im Wesentlichen zumindest einen Halbleiterschalter, vorzugsweise einen IGBT, umfasst. Unter Schutzschalter mit magnetischem Auslöser wird ein solcher mit rein magnetischer, mit thermisch-magnetischer oder mit hydraulisch-mechanischer Auslösung und somit allgemein ein magnetischer, thermisch-magnetischer oder hydraulisch-mechanischer Schutzschalter verstanden.

Die Halbleiterelektronik ist dazu vorgesehen und eingerichtet, bei stromführendem Schutzschalter stromsperrend und bei einer Auslösung des Schutzschalters in Folge eines Überstroms und/oder eines Schaltsignals zumindest kurzeitig stromleitend zu sein, indem bei auslösendem Schutzschalter der Strom, d. h. ein infolge eines Lichtbogens erzeugter Lichtbogenstrom vom Schutzschalter auf die Halbleiterelektronik kommutiert.

Die Halbleiterelektronik des erfindungsgemäßen Trennschalters weist vorzugsweise keinerlei zusätzliche Energiequelle auf und ist demzufolge bei geschlossenem mechanischem Schalter stromsperrend, d. h. hochohmig und somit praktisch strom- und spannungslos. Da über die Halbleiterelektronik bei geschlossenen mechanischen Schaltkontakten des oder jedes Schutzschalters der Schutzschalteranordnung kein Strom fließt und daher insbesondere über dem oder jedem Halbleiterschalter kein Spannungsfall erfolgt, erzeugt die Halbleiterschaltung bei geschlossenen Schaltkontakten der Schutzschalteranordnung auch keine Leistungsverluste. Vielmehr gewinnt die Halbleiterelektronik die zu deren Betrieb erforderliche Energie aus der Trennvorrichtung selbst. Dazu wird die Energie eines beim Öffnen der Schalterkontakte des oder jedes Schutzschalters der Schutzschalteranordnung entstehenden Lichtbogens genutzt. Hierbei ist geeigneterweise ein Steuereingang der Halbleiterelektronik bzw. des Halbleiterschalters derart mit dem oder jedem Schutzschalter verschaltet, dass bei sich öffnenden Schalterkontakten der Schutzschalteranordnung die Lichtbogenspannung die hierzu parallele Halbleiterelektronik stromleitend, d. h. niederohmig und somit stromführend schaltet.

Sobald die Halbleiterelektronik bereits geringfügig stromleitend geschaltet ist, beginnt der Lichtbogenstrom vom Schutzschalter bzw. von dessen Schaltkontakten auf die Halbleiterelektronik zu kommutieren. Indem die Schutzschalteranordnung der Trennvorrichtung mindestens einen zweiten Schutzschalter aufweist, die bzw. deren Schaltkontakten in Reihe geschaltet sind, und der mindestens eine erste Schutzschalter der Schutzschalteranordnung mit der Halbleiterelektronik in Reihe geschaltet ist, wird im Auslösefall der Schutzschalteranordnung eine galvanische Trennung der Last von der Gleichstromquelle und somit durch Öffnen dieses Hybridschutzschalters eine vollständige galvanische Gleichstromunterbrechung erzielt.

Gemäß einer besonders vorteilhaften Weiterbildung der Trennvorrichtung weist diese ein Modul (Arc Fault Module) zur Lichtbogenerfassung und/oder zur Lichtbogenerkennung auf. Dieses Modul wirkt mit einem Stromsensor zur Erfassung des über den oder jeden Schutzschalter fließenden Stroms zusammen, ist mit dem Stromsensor also elektrisch verbunden. Das Modul wertet den erfassten Strom hinsichtlich dessen zeitlichen Verlauf und/oder dessen Steilheit (dl/dt) aus. Wird ein bestimmtes Charakteristikum des erfassten Stromes erkannt, wenn also beispielsweise auf einen Lichtbogen geschlossen wird, so übermittelt das Modul eine Auslösesignal an den oder jeden Schutzschalter zu dessen Auslösung. Hierzu ist das Modul vorzugsweise mit einem motorischen oder magnetischen Antrieb verbunden, der seinerseits mit dem oder jedem Schutzschalter bzw. mit dessen/deren Schaltschloss zur Trennung der Schutzschalterkontakte gekoppelt ist.

Die Trennvorrichtung kann zweipolig oder vierpolige ausgeführt sein. Bei vierpoliger Trennvorrichtung ist mindestens ein Schutzschalter der Schutzschalteranordnung, vorzugsweise eine Reihenschaltung aus mindestens zwei Schutzschaltern mit Schutzschaltertrennkontakten, in einen Hauptstrompfad (Plusstrompfad) der Trennvorrichtung geschaltet. Zusätzlich oder alternativ ist mindestens ein Schutzschalter bzw. Schutzschaltertrennkontakt der Schutzschalteranordnung in den Rückstrompfad (Minusstrompfad) der Trennvorrichtung geschalteten.

Nachfolgend werden Ausführungsbeispiele der Erfindung anhand einer Zeichnung näher erläutert. Darin zeigen:
- Fig. 1: in einem Blockschaltbild eine vierpolige Variante der Trennvorrichtung mit einer Schautzschalteranordnung mit einer Reihenschaltung aus drei magnetischen/magnetisch-hydraulischen Schutzschaltern und einer zu einem der Schutzschalter bzw. zu dessen Schaltkontakten parallelen Halbleiterelektronik,
- Fig. 2: in einem Blockschaltbild gemäß Figur 1 eine zweipolige Variante der Trennvorrichtung,
- Fig. 3: in einem Blockschaltbild die zweipolige Trennvorrichtung mit einem Arc Fault Modul und mit einem Antrieb zur Auslösung der Schutzschalteranordnung, und
- Fig. 4: das Schaltbild einer an sich bekannten Halbleiterelektronik der Trennvorrichtung.

Einander entsprechende Teile sind in beiden Figuren mit den gleichen Bezugszeichen versehen.

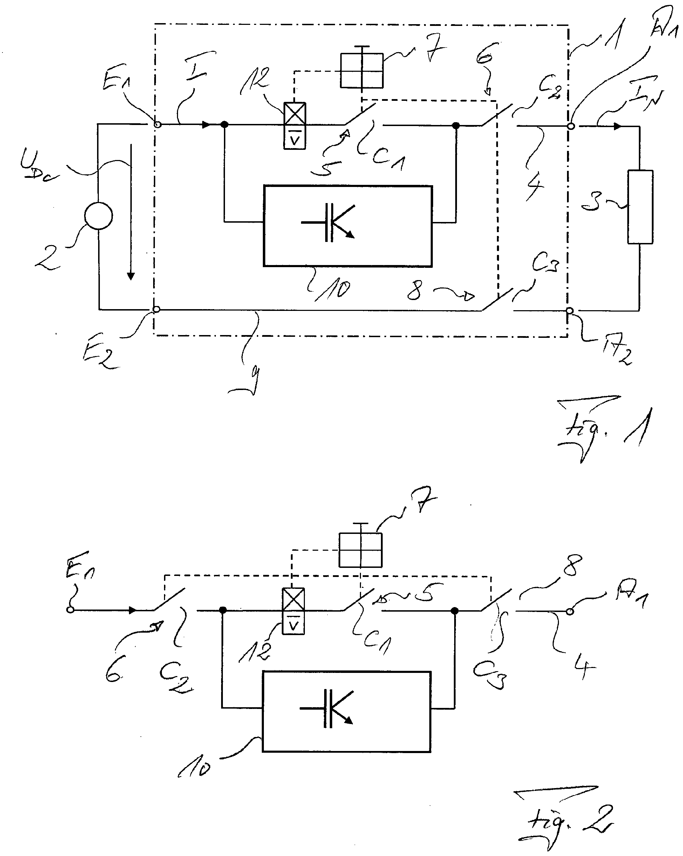

Fig. 1 zeigt schematisch eine Trennvorrichtung 1, die im Ausführungsbeispiel zwischen eine Gleichspannungsquelle 2 zur Erzeugung einer Gleichspannung U_{DC} und eines Gleichstroms I_{N} sowie eine Last 3 geschaltet ist. Die Trennvorrichtung 1 umfasst im den Pluspol repräsentierenden Hauptstrom- oder Pluspfad 4 eine Schutzschalteranordnung in Form einer Reihenschaltung aus zwei magnetischen, insbesondere hydraulisch-magnetischen, Schutzschaltern 5, 6, deren mit einem Schaltschloss 7 gekoppelten Schaltkontakte mit C₁ und C₂ bezeichnet sind. Ein weiterer Schutzschalter 8 bzw. Schaltkontakt C₃ ist in den Rückstrom- oder Minuspfad (Rückführleitung) 9 der Trennvorrichtung 1 geschaltet und ebenfalls mit dem Schaltschloss 7 gekoppelt.

Einem der Schutzschalter 5, 6, 8, hier dem Schutzschalter 5 bzw. dessen Schaltkontakt C₁ ist eine Halbleiterelektronik 10 parallel geschaltet. Die Schutzschalter 5, 6, 8 und die Halbleiterelektronik 10 bilden einen autarken Hybridschutzschalter als Trennvorrichtung 1 für DC-Nennströme (Gleichströme) I_{N} zwischen 4A_{DC} und 25oA_{DC} bei einer Gleichspannung U_{DC} zwischen 300V_{DC} und 1500V_{DC}. Die Halbleiterelektronik 10 umfasst im Wesentlichen mindestens einen Halbleiterschalter 10a, 10b, der dem Schutzschalter 5 der Schutzschalteranordnung 5, 6, 8 parallel geschaltet ist. Das Gate eines vorzugsweise als Halbleiterschalter 10b eingesetzten IGBT's bildet den Steuereingang bzw. einen Steueranschluss 11 der Halbleiterschaltung 10. Dieser Steuereingang oder Steueranschluss 11 kann über eine Ansteuerschaltung an den Hauptstrompfad 4 geführt sein.

Während Figur 1 eine vierpolige Trennvorrichtung 1 beziehungsweise einen vierpoligen Hybridschutzschalter mit versorgungsseitigen Eingängen oder Eingangsanschlüssen E₁ und E₂ sowie lastseitigen Ausgängen beziehungsweise Ausgangsanschlüssen A₁ und A₂ zeigt, ist in Figur 2 eine zweipolige Trennvorrichtung 1 beziehungsweise ein zweipoliger Hybridschutzschalter dargestellt. Die jeweiligen Schutzschalter 5, 6, 8 beziehungsweise deren Schaltkontakte C₁, C₂, C₃ können jeweils ein Schaltschloss 7 und einen magnetischen beziehungsweise magnetisch-hydraulischen Auslöser 12 aufweisen. Geeigneterweise ist jedoch - wie dargestellt - den Schutzschaltern 5, 6, 8 ein gemeinsames Schaltschloss 7 und ein gemeinsamer Auslöser (Auslösevorrichtung) 12 zugeordnet. Die Schaltkontakte Cₙ der weiteren Schutzschalter sind dann mit dem Schaltschloss 7 des Hauptschutzschalters, hier des Schutzschalters 5 vorzugsweise mechanisch gekoppelt, um eine zumindest annähernd zeitgleiche Auslösung der Schutzschalter 5, 6, 8 und Kontakttrennung der Schaltkontakte Cₙ aller Schutzschalter 5, 6, 8 der Schutzschalteranordnung zu bewirken.

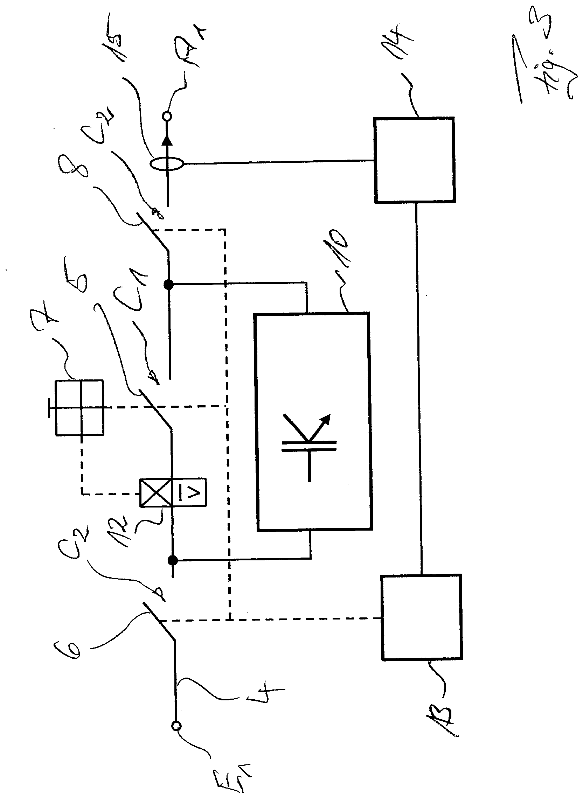

Die in Figur 3 gezeigte Ausführungsform der Trennvorrichtung 1 beziehungsweise des Hybridschutzschalters ist wiederum zweipolig, wobei analog auch diese Ausführungsform als vierpolige Trennvorrichtung 1 ausgeführt sein kann.

Bei dieser Ausführungsform ist den Schutzschaltern 5, 6, 8 beziehungsweise deren Schaltkontakten Cₙ ein als Motor oder Magnetsystem ausgeführter Antrieb 13 zugeordnet. Diesem wird von einem nachfolgend als Arc Fault Module bezeichneten Modul 14 zur Lichtbogendetektion oder zur Erkennung eines Überstroms ein Steuersignal S_{A} zur Schutzschalterauslösung zugeführt. Das Modul 14 ist mit einem Stromsensor 15 verbunden, welcher den vorzugsweise im Hauptstrompfad 4 fließenden Strom I erfasst. Der erfasste Strom I wird mittels des Moduls 14 ausgewertet.

Bei Erfüllung bestimmter Kriterien, beispielsweise bei einer Überschreitung einer Stromgrenze mit 105% bis 150% des Nennstroms (1,05 · I_{N} bis 1,5 · I_{N}) und/oder im Falle einer gewissen Stromsteilheit (dl/dt) wird vermittels des Moduls 14 das Steuer- oder Auslösesignal S_{A} erzeugt. In Folge dessen werden die Schutzschalter 5, 6, 8 der Schutzschalteranordnung praktisch zeitgleich ausgelöst. Ein im Zuge des Öffnens deren Schaltkontakte Cₙ entstehender Lichtbogen bewirkt eine entsprechende Lichtbogenspannung und einen entsprechenden Lichtbogenstrom, der die zuvor stromsperrende Halbleiterelektronik 10 stromleitend schaltet, sodass der im Hauptstrompfad 4 fließende Strom auf die Halbleiterelektronik 10 kommutiert und von dieser bis zum Erlöschen des Lichtbogens übernommen wird.

Die Halbleiterelektronik 10 übernimmt Schaltströme bis zu einem Wert von ca. 1000A innerhalb einer sehr kurzen Zeitspanne, wobei die Kommutierung innerhalb eines entsprechenden Zeitbereiches von 50µs bis 300µs abhängig von der Kreisinduktivität ist. Bei höheren Schaltströmen übernimmt die der Schutzschalteranordnung 5, 6, 8 allein die Abschaltung und eine Strombegrenzung.

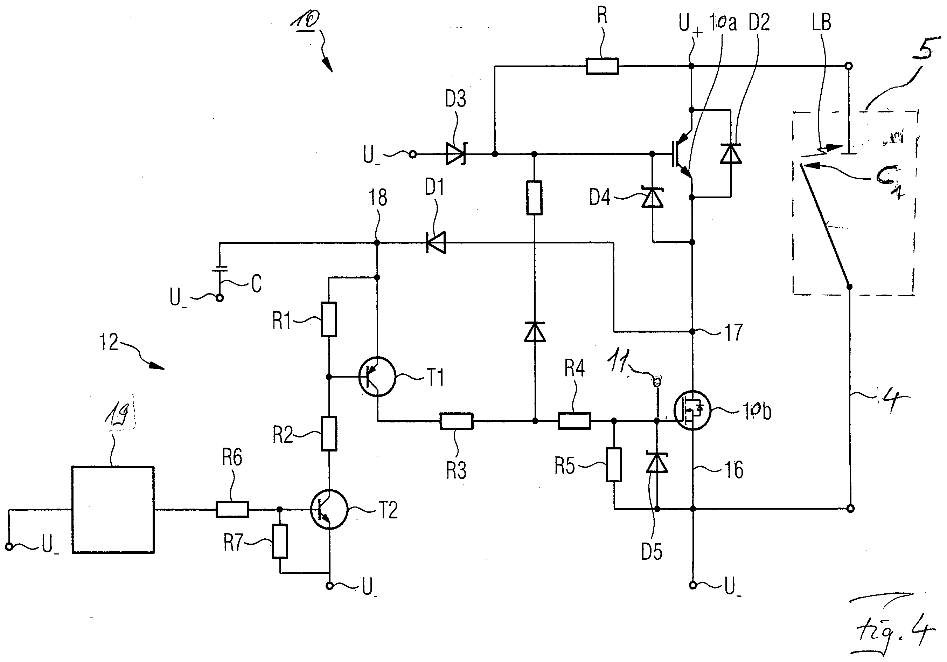

Fig. 4 zeigt die Schaltung einer möglichen, bevorzugt eingesetzten Halbleiterelektronik 10, die dem Schutzschalter 5 der Schutzschalteranordnung 5, 6, 8 des autarken Hybridschutzschalters als Trennvorrichtung 1 parallel geschaltet ist. Erkennbar ist ein erster Halbleiterschalter (IGBT) 10a in einer Kaskodenanordnung mit einem zweiten Halbleiterschalter 10b in Form eines MOSFET in Reihe geschaltet. Die Kaskodenanordnung mit den beiden Halbleiterschaltern 10a, 10b bildet somit analog zur Fig. 1 den zum Schutzschalter 5 der Schutzschalteranordnung 5, 6, 8 und somit zum Hauptstrompfad 4 parallelen Kommutierungspfad 16. Der erste Halbleiterschalter 10a ist zwischen der Gleichstromquelle 2 und der Schutzschalteranordnung und dort parallel zum Schaltkontakt C₁ an den Hauptstrompfad 4 geführt. Dort ist das Potential U+ stets größer als das Potential U₋ auf der gegenüberliegenden Schalterseite, an der der zweite Halbleiterschalter (MOSFET) 10b an den Hauptstromkreis 4 geführt ist. Das Pluspotential U+ beträgt 0V, wenn die Schaltkontakte Cₙ der Schutzschalteranordnung 5, 6, 8 geschlossen sind.

Der erste Halbleiterschalter (IGBT) 10a ist mit einer Freilaufdiode D2 beschaltet. Eine erste Zehnerdiode D3 ist anodenseitig gegen das Potential U₋ und kathodenseitig mit dem Gate (Steuereingang 11) des ersten Halbleiterschalters (IGBT) 10a verbunden. Eine weitere Zehnerdiode D4 ist kathodenseitig wiederum mit dem Steuereingang 11 und anodenseitig mit dem Emitter des ersten Halbleiterschalters (IGBT) 10a verbunden. An einen Mitten- oder Kaskodenabgriff 17 zwischen dem ersten und zweiten Halbleiterschalter 10a bzw. 10b der Kaskodenanordnung ist anodenseitig eine Diode D1 geführt, die kathodenseitig über einen als Energiespeicher dienenden Kondensator C gegen das Potential U₋ geschaltet ist. Über einen anodenseitigen Spannungsabgriff 18 zwischen der Diode D1 und dem Energiespeicher bzw. dem Kondensator C ist ein mit ohmschen Widerständen R1 und R2 beschalteter Transistor T1 über weitere Widerstände R3 und R4 mit dem wiederum an den Steuereingang 12 der Halbleiterelektronik 10 geführten Gate des zweiten Halbleiterschalters 10b verbunden. Eine weitere Zehnerdiode D5 mit parallelem Widerstand R5 ist kathodenseitig mit dem Gate und anodenseitig mit dem Emitter des zweiten Halbleiterschalters 10b verbunden.

Basisseitig wird der Transistor T1 über einen Transistor T2 angesteuert, der seinerseits basisseitig über einen ohmschen Widerstand R6 mit einem beispielsweise als Monoflopp ausgeführten Zeitglied 19 verbunden ist. Basis-emitter-seitig ist der Transistor T2 zudem mit einem weiteren Widerstand R7 beschaltet.

Während der dem Öffnungszeitpunkt der Schalterkontakte Cₙ der Schutzschalteranordnung 5, 6, 8 nachfolgenden Zeitdauer (Lichtbogenzeitintervall) beginnt bereits die Kommutierung des im Wesentlichen dem Lichtbogenstrom entsprechenden Schalterstroms I vom Hauptstrompfad 4 auf den Kommutierungspfad 16 der Halbleiterelektronik 10. Während der Lichtbogen-Zeitdauer teilt sich praktisch der Lichtbogenstrom zwischen dem Hauptstrompfad 4, also über die Schutzschalter 5, 6, 8 und den Kommutierungspfad 16, also die Halbleiterelektronik 10 auf. Während dieses Lichtbogenzeitintervalls wird der Energiespeicher C geladen. Die Zeitdauer ist dabei derart eingestellt, dass einerseits genügend Energie für ein zuverlässiges Ansteuern der Halbleiterelektronik 10 zur Verfügung steht, insbesondere zu deren Abschaltung während eines bestimmten Zeitraums im Anschluss an die die Lichtbogendauer repräsentierende Zeitdauer. Andererseits ist die Zeitdauer ausreichend kurz, so dass ein unerwünschter Kontaktabbrand oder -verschleiß der Schaltkontakte Cₙ der Schutzschalteranordnung 5, 6, 8 vermieden ist.

Mit Beginn des Lichtbogens und somit bei Entstehung der Lichtbogenspannung wird über den Widerstand R der erste Halbleiterschalter 10a zumindest soweit durchgesteuert, dass eine ausreichende Ladespannung und ein ausreichender Lichtbogen- bzw. Ladestrom für die Kondensatoren C zur Verfügung steht. Hierzu wird mit der entsprechenden Beschaltung des ersten Halbleiterschalters 10a mit dem Widerstand R und der Zehnerdiode D3 ein Regelkreis der Elektronik 10 geschaffen, mit dem die Spannung am Kaskodenabgriff 17 auf beispielsweise U_{AB} = 12V (DC) eingestellt ist. Hierbei fließt durch den dem Pluspotential U+ nahen ersten Halbleiterschalter 10a ein Bruchteil des Lichtbogenstroms und damit des Schaltstroms I der hybriden Trennvorrichtung 1.

Die Abgriffsspannung dient zur Versorgung der im Wesentlichen durch die Transistoren T1 und T2 sowie das Zeitglied 19 und den Energiespeicher C gebildeten Ansteuerschaltung der Elektronik 10. Die anodenseitig mit dem Kaskodenabgriff 17 und kathodenseitig mit dem Kondensator C verbundene Diode D1 verhindert einen Rückfluss des Ladestroms aus den Kondensatoren C und über den Kommutierungspfad 16 in Richtung des Potentials U₋.

Ist genügend Energie im Kondensator C und somit im Energiespeicher enthalten, und ist demzufolge eine ausreichend hohe Steuer- oder Schaltspannung am Spannungsabgriff 18 vorhanden, so steuern der Transistor T1 und in Folge dessen der Transistor T2 durch, so dass auch die beiden Halbleiterschalter 10a, 10b vollständig durchsteuern. Der Lichtbogen- bzw. Schalterstrom I fließt aufgrund des im Vergleich zum sehr hohen Widerstand der von der geöffneten Schutzschalteranordnung 5, 6, 8 gebildeten Trennstrecke des Hauptstrompfades 4 wesentlich geringeren Widerstandes der nunmehr durchgesteuerten Halbleiterschalter 10a, 10b praktisch ausschließlich über den Kommutierungspfad 16. Das Pluspotential U+ geht somit erneut gegen 0V, wenn der Schaltstrom I auf die Elektronik 10 kommutiert. In Folge dessen verlöscht der Lichtbogen zwischen den Kontakten Cₙ der Schutzschalteranordnung 5, 6, 8.

Die Ladekapazität und somit die in dem Kondensator C enthaltene Speicherenergie ist derart bemessen, dass die Halbleiterelektronik 10 den Schalterstrom I für eine vom Zeitglied 19 vorgegebene Zeitdauer trägt. Diese Zeitdauer kann auf beispielsweise 3ms eingestellt sein. Die Bemessung dieser Zeitdauer und damit die Festlegung des Zeitgliedes 19 richten sich im Wesentlichen nach den anwendungsspezifischen oder typischen Zeitdauern für ein vollständiges Verlöschen des Lichtbogens sowie nach einer ausreichenden Abkühlung des dabei gebildeten Plasmas. Wesentliche Maßgabe ist hierbei, dass nach erfolgter Abschaltung der Elektronik 10 mit daraufhin wiederum hochohmigem Kommutierungspfad 16 und demzufolge stromsperrender Halbleiterelektronik 10 an der nach wie vor ausgelösten Schutzschalteranordnung 5, 6, 8 kein erneuter Lichtbogen entstehen kann.

Nach Ablauf der durch das Zeitglied 19 festgelegten Zeitdauer sinkt der Schaltstrom I auf praktisch Null (I = 0A) ab, während zeitgleich die Schalterspannung auf die von der Gleichstromquelle U_{DC} gelieferte Betriebsspannung mit beispielsweise ansteigt. Das Pluspotential U+ geht somit gegen diese Betriebsspannung, wenn der Kommutierungspfad 16 infolge der Sperrung der Halbleiterschalter 10 hochohmig und somit die Elektronik 10 erneut stromsperrend wird.

Da zu diesem Zeitpunkt der Hauptstrompfad 4 bei gleichzeitig hochohmigem Kommutierungspfad 16 galvanisch geöffnet ist, ist bereits eine lichtbogenfreie Gleichstromunterbrechung zwischen der Gleichstromquelle U_{DC} und der Last 3 hergestellt. Demzufolge ist die Verbindung zwischen der Gleichstromquelle und der Last 3 bereits zuverlässige getrennt. Als oder anstelle der Last 3 kann auch eine elektrische Einrichtung, z. B. ein Wechselrichter einer Photovoltaikanlage vorgesehen sein.

### Bezugszeichenliste

- 1: Trennvorrichtung/Hybridschutzschalter
- 2: Gleichstromquelle
- 3: Last/Einrichtung
- 4: Hauptstrom-/Pluspfad
- 5: Schutzschalter
- 6: Schutzschalter
- 7: Schaltschloss
- 8: Schutzschalter
- 9: Rückstrom-/Minuspfad
- 10: Halbleiterelektronik
- 10a: erster Halbleiterschalter
- 10b: zweiter Halbleiterschalter
- 11: Steuereingang
- 12: Auslöser/Auslösevorrichtung
- 13: Antrieb
- 14: Arc Fault Modul
- 15: Stromsensor
- 16: Kommutierungspfad
- 17: Kaskoden-/Mittenabgriff
- 18: Spannungsabgriff
- 19: Zeitglied

- A_{1,2}: Ausgang/Ausgangsanschluss
- Cₙ: Schaltkontakt
- E_{1,2}: Eingang/Eingangsanschluss
- I: Strom
- I_{N}: Nennstrom
- S_{A}: Steuer-/Auslösesignal
- U_{DC}: Gleichspannung

## Patentansprüche

1. Trennvorrichtung (1) zur Gleichstromunterbrechung zwischen einer Gleichstromquelle (U_{DC}) und einer Last (3), aufweisend
- eine Schutzschalteranordnung mit einem ersten Schutzschalter (5) und mit mindestens einem zweiten Schutzschalter (6, 8), der mit dem ersten Schutzschalter (5) in Reihe geschaltet ist, und
- eine dem ersten Schutzschalter (5) parallel geschaltete Halbleiterelektronik (10), die bei stromführender Schutzschalteranordnung stromsperrend und bei auslösender Schutzschalteranordnung zumindest kurzzeitig stromleitend ist, indem bei auslösender Schutzschalteranordnung ein infolge eines Lichtbogens erzeugter Lichtbogenstrom vom ersten Schutzschalter (5) auf die Halbleiterelektronik (10) kommutiert,
- wobei zum Zwecke einer galvanischen Trennung der Last (3) von der Gleichstromquelle (U_{DC}) im Auslösefall der zweite Schutzschalter (6, 8) der Schutzschalteranordnung mit der Halbleiterelektronik (10) in Reihe geschaltet ist,
**dadurch gekennzeichnet,**
- **dass** zumindest der erste Schutzschalter (5) einen magnetischen Auslöser (12) aufweist,
- **dass** der erste Schutzschalter (5) und der oder jeder zweite Schutzschalter (6, 8) bzw. deren Schaltkontakte (C₁, C₂, C₃) mittels eines Schaltschlosses (7) gekoppelt sind, und
- **dass** mit dem oder jedem Schutzschalter (5, 6, 8) der Schutzschalteranordnung ein Antrieb (13) zur Auslösung jedes Schutzschalters (5, 6, 8) im Falle eines, insbesondere bei Auftreten des Lichtbogens, erfassten Überstroms gekoppelt ist.

2. Trennvorrichtung (1) nach Anspruch 1,
**dadurch gekennzeichnet,**
**dass** die Halbleiterelektronik (10) mindestens einen steuerbaren Halbleiterschalter (10a, 10b) aufweist.

3. Trennvorrichtung (1) nach Anspruch 1 oder 2,
**dadurch gekennzeichnet,**
**dass** ein Steuereingang (11) der Halbleiterelektronik (10) derart mit dem ersten Schutzschalter (5) der Schutzschalteranordnung verschaltet ist, dass bei sich öffnendem Schutzschalter (5) oder Schaltkontakt (C₁) eine infolge eines Lichtbogens über dem Schutzschalter (5) bzw. über dessen Schaltkontakt (C₁) erzeugte Lichtbogenspannung die Halbleiterelektronik (10) stromleitend schaltet.

4. Trennvorrichtung (1) nach einem der Ansprüche 1 bis 3,
**dadurch gekennzeichnet,**
**dass** ein mit einem Stromsensor (15) zur Erfassung des über den oder jeden Schutzschalter (5, 6, 8) der Schutzschalteranordnung fließenden Stroms (I) zusammenwirkendes Modul (14) zur Lichtbogenerfassung und/oder Lichtbogenerkennung oder zur Erkennung eines Überstroms vorgesehen ist.

5. Vierpolige Trennvorrichtung (1) nach einem der Ansprüche 1 bis 4, aufweisend
- einen ersten Eingangsanschluss (E₁) und einen ersten Ausgangsanschluss (A₁),
- einen zweiten Eingangsanschluss (E₂) und einen zweiten Ausgangsanschluss (A₂),
- einen Hauptstrompfad (4) zwischen dem ersten Eingangsanschluss (E₁) und dem ersten Ausgangsanschluss (A₁), wobei die Schutzschalteranordnung mit dem ersten Schutzschalter (5) mit ersten Schaltkontakten(C₁) und mit dem zweiten Schutzschalter (6) mit zweiten Schaltkontakten (C₂) in den Hauptstrompfad (4) geschaltet ist, und
- einen Rückstrompfad (9) zwischen dem zweiten Eingangsanschluss (E₂) und dem zweiten Ausgangsanschluss (A₂), wobei in den Rückstrompfad (9) ein dritter Schutzschalter (8) mit dritten Schaltkontakten (C₃) geschaltet ist.

6. Trennvorrichtung (1) nach Anspruch 5,
**dadurch gekennzeichnet,**
**dass** die Schaltkontakt (C₁, C₂, C₃) der Schutzschalteranordnung (5, 6, 8) mittels eines gemeinsamen Schaltschlosses (7) gekoppelt sind.

## Claims

1. Disconnecting device (1) for direct current interruption between a direct current source (U_{DC}) and a load (3), comprising
- a circuit breaker arrangement comprising a first circuit breaker (5) and at least one second circuit breaker (6, 8) connected in series with the first circuit breaker (5), and
- semiconductor electronics (10) connected in parallel with the first circuit breaker (5), which are current-blocking when the circuit breaker arrangement is energized and current-conducting, at least briefly, when the circuit breaker arrangement is tripped, that when the circuit breaker arrangement is tripped, an arc current generated as a result of an arc commutates from the first circuit breaker (5) to the semiconductor electronics (10),
- wherein, for the purpose of galvanic isolation of the load (3) from the direct current source (U_{DC}) in the event of tripping, the second circuit breaker (6, 8) of the circuit breaker arrangement is connected in series with the semiconductor electronics (10),
**characterized in**
- **that** at least the first circuit breaker (5) has a magnetic trigger (12),
- **that** the first circuit breaker (5) and the or each second circuit breaker (6, 8) or respectively their switching contacts (C₁, C₂, C₃) are coupled by means of a switching lock (7), and
- **that** a drive (13) is coupled to the or each circuit breaker (5, 6, 8) of the circuit breaker arrangement for tripping each circuit breaker (5, 6, 8) in the event of an overcurrent being detected, in particular when the arc occurs.

2. Disconnecting device (1) according to claim 1,
**characterized in**
**that** the semiconductor electronics (10) have at least one controllable semiconductor switch (10a, 10b).

3. Disconnecting device (1) according to claim 1 or 2,
**characterized in**
**that** a control input (11) of the semiconductor electronics (10) is connected to the first circuit breaker (5) of the circuit breaker arrangement in such a way that, when the circuit breaker (5) or switching contact (C₁) opens, an arc voltage generated as a result of an arc across the circuit breaker (5) or respectively across its switching contact (C₁) switches the semiconductor electronics (10) to conduct current.

4. Disconnecting device (1) according to one of claims 1 to 3,
**characterized in**
**that** a module (14), which interacts with a current sensor (15) for detecting the current (I) flowing via the or each circuit breaker (5, 6, 8) of the circuit breaker arrangement, is provided for arc detection and/or arc recognition or for detecting an overcurrent.

5. Four-pole disconnecting device (1) according to one of claims 1 to 4, comprising
- a first input terminal (E₁) and a first output terminal (A₁),
- a second input terminal (E₂) and a second output terminal (A₂),
- a main current path (4) between the first input terminal (E₁) and the first output terminal (A₁), the circuit breaker arrangement being connected into the main current path (4) with the first circuit breaker (5) having first switching contacts (C₁) and with the second circuit breaker (6) having second switching contacts (C₂), and
- a return current path (9) between the second input terminal (E₂) and the second output terminal (A₂), a third circuit breaker (8) with third switching contacts (C₃) being connected in the return current path (9).

6. Disconnecting device (1) according to claim 5,
**characterized in**
**that** the switching contacts (C₁ , C₂ , C₃) of the circuit breaker arrangement (5, 6, 8) are coupled by means of a common switching lock (7).

## Revendications

1. Dispositif de déconnexion (1) pour l'interruption du courant continu entre une source de courant continu (U_{DC}) et une charge (3), comprenant
- un arrangement de disjoncteurs avec un premier disjoncteur (5) et avec au moins un deuxième disjoncteur (6, 8), qui est connecté en série avec le premier disjoncteur (5), et
- une électronique à semi-conducteur (10) connectée en parallèle avec le premier disjoncteur (5), laquelle électronique à semi-conducteur (10) bloque le courant lorsque l'arrangement de disjoncteurs conduit le courant et qui conduit le courant au moins brièvement lorsque l'arrangement de disjoncteurs se déclenche, en ce que, lorsque l'arrangement de disjoncteurs se déclenche, un courant d'arc électrique généré à la suite d'un arc électrique commute du premier disjoncteur (5) sur l'électronique à semi-conducteur (10),
- le deuxième disjoncteur (6, 8) du dispositif de protection étant connecté en série avec l'électronique à semi-conducteur (10) dans le but d'une séparation galvanique de la charge (3) de la source de courant continu (U_{DC}) en cas de déclenchement,
**caractérisé en ce**
- **qu'**au moins le premier disjoncteur (5) comprend un déclencheur magnétique (12),
- **que** le premier disjoncteur (5) et le ou chaque deuxième disjoncteur (6, 8) ou respectivement leurs contacts de commutation (C₁ , C₂ , C₃) sont couplés au moyen d'un verrou de connexion (7), et
- **qu'**un entraînement (13) est couplé au ou à chaque disjoncteur (5, 6, 8) de l'arrangement de disjoncteurs pour déclencher chaque disjoncteur (5, 6, 8) dans le cas d'une surintensité détectée, en particulier lors de l'apparition de l'arc électrique.

2. Dispositif de déconnexion (1) selon la revendication 1,
**caractérisé en ce**
**que** l'électronique (10) à semi-conducteur a au moins un commutateur (10a, 10b) à semi-conducteur pouvant être commandé.

3. Dispositif de déconnexion (1) selon la revendication 1 ou 2,
**caractérisé en ce**
**qu'**une entrée de commande (11) de l'électronique à semi-conducteur (10) est connectée au premier disjoncteur (5) du dispositif de protection de telle sorte que, lorsque le disjoncteur (5) ou le contact de commutation (C₁) s'ouvre, une tension d'arc électrique générée par suite d'un arc électrique au-dessus du disjoncteur (5) ou respectivement par l'intermédiaire de son contact de commutation (C₁) commute l'électronique à semi-conducteur (10) de manière à conduire le courant.

4. Dispositif de déconnexion (1) selon l'une des revendications 1 à 3,
**caractérisé en ce**
**qu'**il est prévu un module (14) coopérant avec un capteur de courant (15) pour détecter le courant (I) passant par le ou chaque disjoncteur (5, 6, 8) de l'arrangement de disjoncteurs, pour détecter un arc électrique et/ou reconnaître un arc électrique ou pour détecter une surintensité.

5. Dispositif de déconnexion (1) quadripolaire selon l'une des revendications 1 à 4, comprenant
- une première borne d'entrée (E₁) et une première borne de sortie (A₁),
- une deuxième borne d'entrée (E₂) et une deuxième borne de sortie (A₂),
- un trajet de courant principal (4) entre la première borne d'entrée (E₁) et la première borne de sortie (A₁), l'arrangement de disjoncteurs étant connecté dans le trajet de courant principal (4) avec le premier disjoncteur (5) avec des premiers contacts de commutation (C₁) et avec le deuxième disjoncteur (6) avec des deuxièmes contacts de commutation (C₂), et
- un trajet de courant de retour (9) entre la deuxième borne d'entrée (E₂) et la deuxième borne de sortie (A₂), un troisième disjoncteur (8) avec des troisièmes contacts de commutation (C₃) étant connecté dans le trajet de courant de retour (9).

6. Dispositif de déconnexion (1) selon la revendication 5,
**caractérisé en ce**
**que** les contacts de commutation (C₁ , C₂ , C₃) de l'arrangement de disjoncteurs (5, 6, 8) sont couplés au moyen d'un verrou de connexion (7) commun.
